# EUROPEAN PATENT APPLICATION

(11) **EP 2 257 108 A1**
(43) Date of publication of application: **01.12.2010**
(21) Application number: 09368015.5
(22) Date of filing: 29.05.2009
(51) Int. Cl.: H04W 48/16, H04W 48/20, H04W 84/18, H04W 88/06

(54) **Process and communication system for establishing intermittent connections between a moving system and external access points**

(71) Applicant: Institut Eurecom G.I.E., 06904 Sophia-Antipolis (FR)
(72) Inventor: Filali, Fethi, 06600 Antibes (FR)
(74) Representative: Schuffenecker, Thierry

(57) **Abstract**

A process for establishing fast intermittent connections between a moving system and external Access points, said moving system comprising a Wireless infrastructure Database of available Access Points, said process involving the steps of:
- establishing a first infrastructure connection between said moving system and one access point, allowing one application running into said moving system to get intermittent access to the Internet network;
- establishing a second adhoc connection between said moving system and a counterpart second moving system;
- exchanging information/data with said second moving system relative to infrastructure parameters regarding available Access Points to be used for a subsequent infrastructure connection between said moving system and another one of said external Access Points which may be used by said application.
In one embodiment, the first infrastructure connection at said moving system uses a first radio interface and said second adhoc connection uses a second radio interface. Alternatively, a same radio interface of the moving system may be switched between the infrastructure and adhoc mode.

## Description

### Technical field

The invention relates to the field of wireless communication systems and more particular to a process for establishing intermittent connections between a moving system, such as a moving vehicle, and the access points available in its environment.

### Background Art

### General considerations

The design of communication networks like the Internet and cellular networks assume that there is always a long-term end-to-end connectivity and if there is an interruption in the service, the problem is in general solved shortly. User applications designed for these networks assume that both clients and servers nodes are permanently connect to the Internet and that routers use the store-and-forward technique. Consequently, nodes that are temporarily disconnected from the network cannot communicate. For example, the TCP/IP protocol stack cannot support the development of applications that tolerate networks disconnections as the SAP (Service Access Point) provided by the transport layer assumes that when the user starts an application there should be connectivity to the final destination. Consequently, in the case of Internet applications, packets generated by the source will be lost at the transport layer or the network layer in the case when it is not connected to the Internet. However, many user applications can tolerate disruptions in the Internet end-to-end connectivity. Possible disruptions include high delay variations, asymmetry, connectivity lost, variable bandwidth, variable loss rate, etc. Examples of applications that belong to this class, which is referred as opportunistic applications (or delay-tolerant/disruption-tolerant applications or applications) include asynchronous mails exchange, digital maps/software update, and file sharing/download. More generally, all applications that do not require sending/receiving data to/from the network in real-time can belong to this category. These applications can be supported in networks where the connectivity is not always guaranteed. In this case, nodes store and carry messages when no forwarding opportunity towards the final destination exists and exploit any future connectivity opportunity with other nodes to bring the messages closer to the destination. This technique is usually refereed as store, carry, and forward delivery mechanism.

Current TCP/IP protocol stack cannot provide a delay-tolerant service to user applications due to its design principals including the assumption that network connectivity is always guaranteed by the data link layer. To support opportunistic applications is then necessary to design new communication mechanisms, protocols, and services without impacting the default behavior of the TCP/IP protocol stack. This is exactly the aim of this invention which describes not only the communication software facilities but also the necessary communication units that enable delay tolerant applications in moving devices such as vehicles.

### Vehicular communication: State of the Art:

Vehicular wireless communication is gaining an increasing interest in the last few years. Indeed, several standardization bodies and initiatives have been initiated such as IEEE P802.11 and IEEE 1609 task groups, Car-to-Car Communication Consortium (C2C-CC), and Vehicular Infrastructure Initiative (VII, IntelliDriveSM). ISO TC204 WG16 CALM is working on a set of standards to allow high speed ITS communication using one or several access technologies. Moreover, a Technical Committee focusing on Intelligent Transport Systems (ITS) has been created recently at ETSI to develop standards of wireless communications for intelligent transportation systems.

There are several emerging applications that are specific to vehicular wireless networks. To be supported efficiently, new communications protocols have to be developed and standardized. These protocols concern all layers from physical to application layer and they are expected to provide both vehicle-to-vehicle and vehicle-to infrastructure communications.

One of the radio access technologies that can be used in vehicle wireless networks is IEEE 802.11 which is the basis of WiFl networks. Deployed 802.11 wireless infrastructures can be found at homes, coffee shops or larger areas such as campuses, industrial zones, shopping malls and airports. These access points (APs) are mainly deployed in a spontaneous manner by individuals or independent organizations. Besides, some of them offer free anonymous access with no security issues. Moreover, market estimates indicate that Wi-Fi equipments sales are and will considerably increase in years to come. Thus, such pre-existing infrastructure can be very handy for public use since it provides ubiquitous wireless connectivity and hence allows Internet access on the fly. Therefore, we aim at taking benefit of unplanned 802.11-based wireless infrastructure to sustain Internet access to in-vehicles communication devices.

There is a wide range of applications to which such infrastructure can be useful. For example, if we consider an application fof wireless sensor networks deployed on moving vehicles also known as vehicular sensor networks (VSNs). In this kind of networks, heterogeneous sensor nodes collect variable data during the vehicle journey based on the task they are designed to serve. The set of collected data has then to be forwarded to the control center for further processing and acting decisions. To reach the final sink, the vehicle can connect to one of the encountered APs in range which usually provide connection to the Internet.. However, this solution comes with at least two main challenges. First, vehicles' speed impacts the connectivity time with the 802.11 APs. Second, when discovering more than one AP at the same time, non negligible part of their visibility time will be consumed by access point selection phase and its attempts to establish connection with the non-secured selected AP. Consequently, the effective time used for data transmission will be severely reduced. Moreover, a vehicle can be moving in an isolated region with no access points providing Internet access. In such scenario, it has to wait an unpredictable time before encountering any AP or decide to use instead another neighboring vehicle to relay its data to the final destination in store-carry-and-forward fashion. Other examples of applications for which the paradigm of opportunistic Vehicle to Internet communications works well include software or digital maps updates, vehicle diagnostic reporting, and asynchronous mail transfer.

Intuitively, we expect that knowing the wireless infrastructure in advance has lot of merits for the design of "intelligent" opportunistic communication architecture for vehicle to Internet (or Internet to Vehicle) communications. Several websites provide maps of WiFi access points. Some examples such as WiFiMaps, Jlwire.com, and FON Maps give the location and characteristics of the encountered APs. However, they are limited to specific regions (WiFiMaps for zones in the US) or for specific hardware (FON Maps only locates FON APs). Besides, in such solutions, data is constructed through war-driving results uploaded by independent users which impact the accuracy of the collected data and also the updating frequency which impacts its freshness. Showed maps can become outdated quickly by the time the driver consults them.

It can thus be seen that known techniques do not fully support the handling of fleeting connections between a moving vehicle and its environment and that there is significant need to improve communication units that enable delay tolerant applications in in-vehicle devices.

### Summary of the invention

It is an object of the present invention to provide a process and communication system achieving effective intermittent wireless Internet connections in a moving vehicle.

It is an object of the present invention to provide a communication method and system adapted to efficiently manage intermittent connections in a constantly changing environment including fleeting possibilities of access to the Internet Network.

It is a further object of the present invention to provide a method and process suitable for an Information Handling System in a car which efficiently manages the consecutive connections which are likely to be established with different access points detected as the vehicle moves.

It is still another object of the present invention to provide a process allowing successive and efficient connections in the context of an opportunistic network.

These and other objects of the invention are achieved by means of process for establishing fast intermittent connections between a moving system and external Access points, the moving system comprising a Wireless infrastructure Database (207) of available Access Points.

The process involves the steps of:
- establishing a first infrastructure connection between said moving system and one access point, allowing one application running into said moving system to get intermittent access to the Internet network;
- establishing a second adhoc connection between said moving system and a counterpart second moving system;
- exchanging information/data with said second moving system relative to infrastructure parameters to be used for the next infrastructure connection which may be used by said application.

In one embodiment, the first infrastructure connection uses a first radio interface and said second adhoc connection uses a second radio interface.

Alternatively, the first infrastructure and the second infrastructure connection use the same radio interface which can be switched from infrastructure mode to an adhoc mode.

Preferably, the moving system stores and updates a Wireless Infrastructure Database of available Access Points, said process further comprising the steps of:
- configuring the system to an infrastructure mode so as to allow connection to one available Access Point so as to provide Internet Connection to said application;
- detecting loss of connectivity with said Access Point or no request for connection from said application;
- configuring the interface to an adhoc communication mode so as to be able to enter into a cooperative mode with a second moving system in order to exchange information contained into the database ;
- exchanging information with the cooperative second moving system and relative to the wireless infrastructure parameters for a future connection; ;
- switching back to said infrastructure mode using the information received from said second moving system;

In one embodiment, the process involves the step of collecting Global Positioning Satellite (GPS) position and speed of the moving system and use said information for determining and selecting the more appropriate access point to use in an infrastructure connection.

Preferably, the process involves:
A first functional block for periodically scanning the presence of access points and for gathering information relevant to said scanned access point including,
   - Time stamp: date of the discovery of the AP;
   - Global Positioning Satellite (GPS) coordinates including: altitude, longitude, latitude of the vehicle when discovering the AP in question;
   - Speed of the vehicle;
   - identifiers of the Access point (BSSID, ESSID);
   - Frequency channel number;
   - Encryption: set to "on" or "off' depending on whether the AP applies or not authentication mechanisms;
   - Signal quality and noise level.
A second functional block which communicates with the first functional block and acceding to said Wireless Infrastructure Database for the purpose of selecting the more appropriate Access Point to use in an infrastructure connection.
A third functional block communicating with said second functional block (IISL) and providing interface with opportunistic applications running inside said moving system and requesting access to the Internet Network, said third functional block exchanging ConnectivitylnformationRequest and ConnectivitylnformationReply with said second functional block and exchanging messages of:
   RegisterRequest, RegisterReply, ResourceRequest and ResourceReply with said opportunistic application.
A fourth functional block (CIDP 306) providing communication in adhoc mode with cooperative moving systems in order to exchange relevant information contained in the Wireless Infrastructure Database.

The invention also achieves a communication system for establishing fast intermittent connections between a moving system and external Access points, said moving system comprising a Wireless infrastructure Database of available Access Points, said system including:
- means for establishing a first infrastructure connection between said moving system and one access point, allowing one application running into said moving system to get intermittent access to the Internet network;
- means for establishing a second adhoc connection between said moving system and a counterpart second moving system;
- means for exchanging information/data with said second moving system relative to infrastructure parameters to be used for the next infrastructure connection which may be used by said application.

In one embodiment, the first infrastructure connection uses a first radio interface and said second adhoc connection uses a second radio interface.

Alternatively, the first infrastructure and said second infrastructure connection use the same radio interface which can be switched from infrastructure mode to an adhoc mode.

The invention is particularly suitable for providing fast intermitting connection to the Internet network to a system located in a car.

### Description of the drawings

Other features of one or more embodiments of the invention will best be understood by reference to the following detailed description when read in conjunction with the accompanying drawings.
Figure 1 illustrates the general context of use of the present invention.
Figure 2 illustrates the general architecture of one embodiment suitable for a moving vehicle, such as a car.
Figure 3 illustrates the general functional blocks associated in one particular embodiment.
Figure 4 illustrates one embodiment of a process of switching between an infrastructure mode and an adhoc mode.
Figure 5 illustrates one embodiment of the process according to the present invention.
Figure 6 illustrates one embodiment of the protocol of messages exchanged between the IISL block 305 and the IDAL block 304.
Figure 7 illustrates one embodiment of the protocol of messages exchanged between the IISL block 305, IDAL block 304, and one selected Access Point.
Figure 8 illustrates one embodiment of the protocol of messages exchanged between OACL block 306 and IISL block 305.
Figure 9 illustrates one embodiment of the protocol of messages exchanged between the IOACL block 306, IISL block 305 and one opportunistic application.
Figure 10 illustrates one embodiment of the operations of the CIDP block 308.
Figures 11-16 are illustrative ASCII formats of CIDP (block 308) messages being exchanged by the different vehicles.

### Description of the preferred embodiment

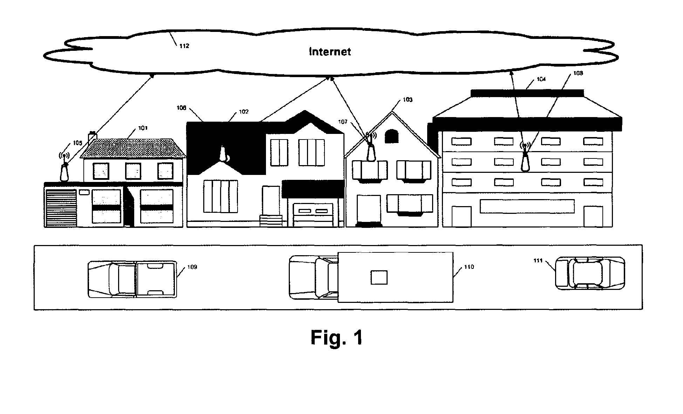

Figure 1 illustrates a practical situation of the use of the process and apparatus of the present invention which takes advantage of the large deployment of penetration of WIFI-based networks and the large deployment of 802.11 access points (APs) in many cities in the world. Figure 1 shows a set of buildings 101-104 which include a set of corresponding access points 105-108 allowing connection to the Internet network 112.

In particular, in the recent few years there has been an explosive growth in the use of wireless LANs arising from the advent of the IEEE 802.11 standards. Wireless networking has become popular as many metropolitan areas in the world are equipped with an infrastructure to provide home networking and Internet access in hot spots (e.g., airports, cafes, restaurants). For instance, many home users deploy Wi-Fi networks in their homes to mainly access to Internet, and this trend is likely to continue for the foreseeable future. Simple users' APs can be open or even underutilized, making possible the idea of sharing the Internet connectivity with other fixed or moving users. Of course, many security and financial issues arise, that's why different business models try to legitimate and organize such phenomenon (e.g., Fon.org,). Regardless security and business issues, the process is designed to offer Internet connectivity through unplanned and planned wireless networks.

For instance, it is anticipating that in the near future, many vehicles will be equipped with wireless interfaces, such as van 109, truck 110 and private car 111 in Figure 1, enabling them to form opportunistically mobile ad hoc networks on the fly and connect with fixed infostations while passing by. Infostations are fixed APs that are potentially connected to the Internet network 112, such as AP 105-108 illustrated in Figure 1. They may act as dissemination points from where information from the backbone network flows towards the vehicles. These APs can also correspond to the future Road Side Units (RSUs) as designed by the IEEE WAVE architecture for C2X communications or ITS Roadside Stations as defined by other standardization bodies (ETSI, ISO) which work on the establishment of communication architectures for ITS.

The process and apparatus which are described below achieves what can be called an Opportunistic Communication Architecture for Car2X communications when moving systems are cars. The proposed solution, so-called OppCar, can be integrated in a in-vehicle wireless communication router which periodically detects APs in the vehicle's range and connect to Internet through the best AP. Thanks to that, applications running in in-vehicle devices (laptops, sensors, PDAs, etc.) would be able to access Internet opportunistically via hotspots/APs in vehicle's range.

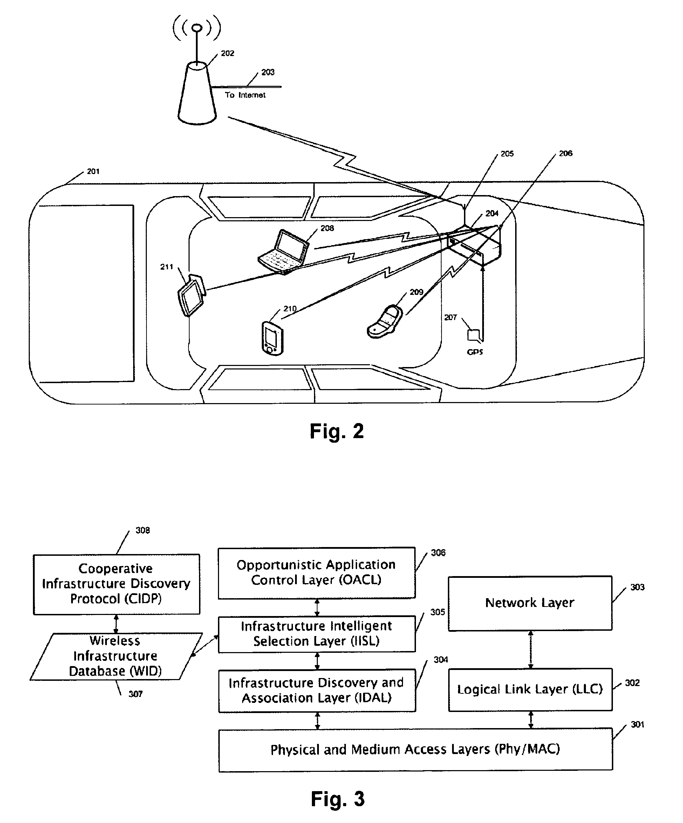

Figure 2 more particularly illustrates the different components in one embodiment. One sees one vehicle 201, such as a private car, which is fitted with a wireless communication control unit 204 which incorporates the means for embodying a wireless communication router and gateway and further more includes additional means for executing the processing steps, functional blocks and communication layers which shall be described later.

Wireless communication control unit 204 provides wireless access to external Access Points (AP) and external networks like the Internet. For that purpose, Unit 204 includes at least one wireless communication interface such as a 802.11 interface, but may also and optionally include other types of communication interfaces such as Bluetooth, Infrared, and Ethernet.

In particular, the wireless transmission station plays the role of a router which can be embedded in a moving vehicle. This said wireless transmission device can have two wireless interfaces: one to connect to external networks and another one to serve as an internal access point for the wireless transmission stations in the vehicle such as mobile phones, sensors, personal digital assistant, and laptops.

Wireless communication control unit 204 is equipped with at least one wireless interface card with one radio interface, with one radio interface. Figure 2 illustrates one embodiment which incorporates two distinctive wireless interface, respectively based on a first radio interface 205 and a second radio interface 206 allowing, as will be shown below, the possibility to simultaneously achieve both infrastructure (Vehicle to Infrastructure) and adhoc (Vehicle to Vehicle) communications. Control unit 204 communicates with internal devices and components fitted with wired or wireless communication capabilities, such as, for instance, a mobile telephone 209, a Portable Document Assistant (PDA) or laptop computer 208 and more generally any kind of Information Handling System (IHS) device such as devices 210 and 211.

While Figure 2 mainly shows internal components which are dedicated to be used by the customer, it is clear that other kind of components, particularly directed to the internal control or monitoring of the car internal parts (engine, speed control, adaptive internal processes, etc.) may include communication means for communicating with communication unit 204.

In addition, the system comprises a GPS system 207 providing accurate position and speed parameters of the moving vehicle and it is connected to the communication unit 204.

While any conventional car which is fitted with wireless communication means is likely to establish a connection with an existing Access Point provided that the Access Points settings (BSSID, SSID, Wireless Encryption Protocol, etc.) be known to the vehicle. The fact that the car is moving, at a relatively fast speed, results in a continuous change in the environment and the availability of access points, thus preventing conventional known system to establish and manages such fleeting connections. In particular, it should be noticed that Internet legacy applications would clearly proceed with continuous trials of establishing a connection which would fail in the case where no access point would be available or would accept to serve the soliciting application.

It should be noticed that the conventional TCP/IP procedure are clearly not suitable and fully incapable of handling such changing environment.

The invention, described below with details, provides additional interfaces and mechanisms which together would achieve such goal. As will be appreciated by one of skill in the art, the present invention may be embodied as a method, data processing system or program product. Accordingly, the present invention may take the form of an entirely hardware embodiment, an entirely software embodiment or an embodiment combining software and hardware aspects. Furthermore, the present invention may take the form of a computer program product on a computer-readable storage medium having computer-readable program code means embodied in the medium. Any suitable computer readable medium may be utilized including hard disks, CD-ROMs, optical storage devices, or magnetic storage devices.

The present invention is described below with reference to flowchart illustrations of methods, apparatus (systems) and computer program products according to the invention. It will be understood that each block of the flowchart illustrations, and combinations of blocks in the flowchart illustrations, can be implemented by computer program instructions. These computer program instructions may be loaded onto a computer or other programmable data processing apparatus to produce a machine, such that the instructions which execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or another programmable data processing apparatus to cause a series of operational steps to be performed on the computer or other programmable apparatus to produce a computer implemented process such that the instructions which execute on the computer or the other programmable apparatus provide steps for implementing the functions specified in the flowchart block or blocks.

Accordingly, blocks of the flowchart illustrations support combinations of means for performing the specified functions, combinations of steps for performing the specified functions and program instruction means performing the specified functions. It will also be understood that each block of the flowchart illustrations, and combinations of blocks in the flowchart illustrations, can be implemented by special purpose hardware or computer systems which perform the specified functions or steps, or combinations of special purpose hardware and computer instructions.

Figure 3 illustrates the architecture of the general functional blocks achieving access of a so-called opportunistic application (not illustrated) to the Internet network in one embodiment. Clearly, those blocks may be implemented in control unit 204 or distributed between control unit and some other elements.

Control unit 204 first comprises the components which are common to any conventional router, that is to say a Phy/MAC block 301, a LLC (Logical Link Control) block 302 and a Network layer 303.

Phy/MAC block 301 includes all the procedures and protocols for providing the Physical and Medium Access Layer functions which involve one particular access technology, such as the IEEE 802.11 standard. In particular, such layer achieves the association to the access point further to the authentication step. All outgoing and incoming data frames should pass through one of the access technologies supported by the communication unit.

LLC block 302 is a Logical Link Layer which includes all the procedures and protocols for providing the logical access to the physical medium and particularly allows the use of different logical layers on the same physical medium.

Network layer 303 includes all the procedures and protocols involved in the network layer, including addressing and routing as well as the mobility management. This layer 303 integrates other protocols such as the Internet Connection Management Protocol (ICMP) and Internet Group Management Protocol (IGMP).

It should be clear that blocks 301-303 are those blocks which are conventionally used in a router for allowing the user packets to be transmitted to the network. Such blocks are well known to a skilled man and will therefore not be further developed.

In addition, Control unit 204 includes the following inventive blocks or layers described below:
1. An Infrastructure Discovery and Association Layer (IDAL) block 304;
2. An Intelligent Infrastructure Selection Layer (IISL) block 305;
3. An Opportunistic Application Control Layer (OACL) block 306;

Furthermore, the system integrates:
4. A Wireless Infrastructure Database (WID) block 307;
5.A Cooperative Infrastructure Discovery Protocol (CIDP) block 308;

### 1. Infrastructure Discovery and Association Layer (IDAL) block 304

IDAL functional block 304 achieves periodical scanning of the environment of the moving vehicle in order to collect and gather data relating to available access points.

In one preferred embodiment, the following information is collected by IDAL block 304 for each access point:
- Time stamp: date of the discovery of the AP;
- Global Positioning Satellite (GPS) coordinates including: altitude, longitude, latitude of the vehicle when discovering the AP in question;
- Speed of the vehicle;
- Heading of the vehicle;
- Basic Service Set IDentifier (BSSID): unique identifier of 6 Bytes. In an infrastructure mode, it represents the MAC address of the AP;
- Service Set IDentifier (SSID): 32 characters identifier, it represents the network name;
- Number of the frequency channel in which the AP is operating;
- Encryption information: set to "on" or "off' depending on whether the AP applies or not authentication mechanisms. In the case of secured AP, more information on the activated security strategy can be provided
- Signal quality;
- Noise level.

The BSSID and SSID are the basic association procedure parameters but knowing the frequency channel in which the AP is operating may accelerate this procedure. Besides, in an unplanned wireless network context, discovering the security setting of an AP has shown to be important information. To say, connecting to the Internet from an AP encountered opportunistically in the roadside without any previous authentication suggests that this AP is not protected. Localization information can intervene in the infrastructure selection approach or be exchanged between cars that, using a wireless infrastructure announcement protocol, desire sharing their local database, especially in a first visited area where all existent APs are not known.

Scan approach: In IEEE802.11, there are two scan approaches: active and passive scan.

In the passive scanning the mobile unit switches for a candidate channel and listens for periodic beacon packets generated by the APs to announce their presence, (typically every 100 ms). However, the latency incurred by this approach can be quite long since the client must wait the full interval in each channel. To reduce this delay, most IEEE802.11 implementations handle active scanning.

In the active scanning the unit has to probe the AP with the ESSID field is set to 'ANY' when it is not looking for a particular AP. Each AP that activates broadcast option will answer this request via a probe response. The unit is not obliged to wait for beacons from APs. The issue, however, is that active scanning imposes additional overhead on the network because of the transmission of probe and corresponding response frames. An active scan is mainly regulated by two parameters:
- *MinChanne*/*Time:* This represents the amount of time to wait for the first response before declaring the channel empty (no access point in range). It is an adjustable parameter. - *MaxChanne*/*Time:* This represents the amount of time to wait for to collect potential additional probe responses from other APs. This value is meant to be configured based on an estimate of the number of overlapping APs and the load on the channel.

IDAL functional block 304 periodically detects all the APs in the vehicle's range, extracts some useful information about those APs, and records them in the Wireless Infrastructure Database (WID).

Once one scan operation is achieved or after detection of connectivity lost, the Intelligent Infrastructure Selection Algorithm is applied on logged APs' information to choose the best one of them to which the system tries to connect to. Information related to the best AP stored in the Wireless Infrastructure Database may be updated with the services offered by this AP: which traffic does it filter and which ports does it leave open. The control of the access point's signal quality to which the vehicle is connected has to be done by the system to detect connectivity loss and to handle when possible a handoff procedure.

### 2. Intelligent Infrastructure Selection Layer (IISL) block 305

In the IEEE 802.11 MAC layer, we can distinguish open system authentication (i.e., no security), pre-shared key authentication (WEP), and IEEE 802.11i. Hence, we define here an open AP as an AP which has disabled WEP encryption key and has at least one open port. That is not all the story, among open APs, which one to select "best" from a list of open candidates ones? In IEEE 802.11a station can associate with the AP with the strongest received signal strength. However this may result in a significant imbalance between several stations while others are lightly loaded or even idle. Some researches consider potential or available bandwidth metric. In fact, AP selection still is a real issue in many researches. In vehicular environment it is yet the case. For moving vehicles, the AP having the highest RSSI is the access point having the biggest potential visibility (in this invention we define visibility of an access point to a system as the duration between the date the system has received the first frame from this access point and the date it has received the last frame. If there is reappearance of the AP, its average visibility is then considered). Thus, eliminating such parameter from access point selection procedure is quite unreasonable. That's why our procedure of selection treats an AP list ordered by the signal quality. Besides, in the process of connection establishment, IP address acquisition attempt is the longest phase due to ping and ARP messages. At the same time, from our experimental results we have noticed that the average visibility of an AP is sufficiently large that this AP can be at the top of the candidates list more than one time. That means that after a fail DHCP request, the system risks to probe the same DHCP server as much as the related AP is in the top of the list, which is expensive in terms of delays, that's why we have proposed to remove this AP from the candidate list. Another influencing factor is the fact that one of the DHCP failure reasons is the lost of the DHCP request frame itself, that's why we don't eliminate such AP from the candidate list immediately, but it is added in a black list just after two failed attempts. Such AP is qualified by a special marking. Management of marked APs is yet a subject of study: does a marked AP has to still marked for the rest of the scan measures? The use of the access point history in IP address granting is efficient to reduce connection delays.

### 3. Opportunistic Application Control Layer (OACL) block 306

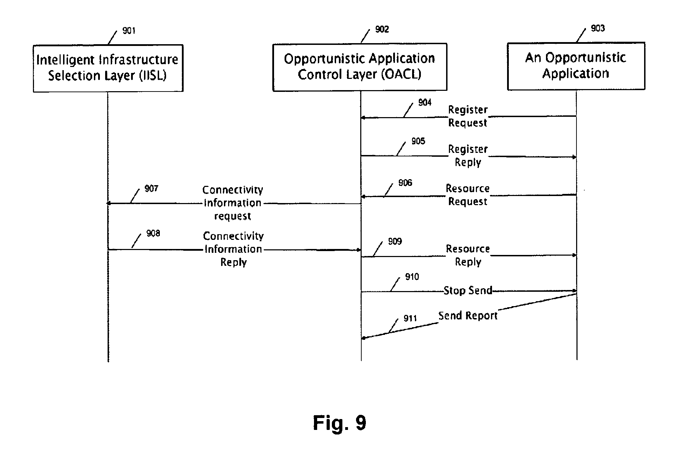

As mentioned earlier the development of opportunistic applications shall not follow the classical Internet paradigm where the connectivity is assumed to be present long enough. OACL block 306 provides a library (set of services and primitives) to these applications (not illustrated in the figure) in order to be able to send and receive data packets. Indeed, when one application requests access to an external destination, a special request is issued by the latter and forwarded to OACL block 306 which is processed in accordance with the process illustrated in Figure 9 described below.

In order to get access to internet, the applications should first get attached to the communication unit where the process is deployed which would forward their packets to the destination if any connection is available. This is being possible since the OACL block 306 communicates with the IISL block 305 to detect the availability of the connectivity and its characteristics (transmission rate, estimated connectivity time, etc.).

In order to keep easily the programming of opportunistic applications, OACL has two parts: service side running with the software package embodying the process herein described and a client side running as a software library in in-vehicle devices where user applications are installed. The communication between the OACL server and OACL client(s) is done over a legacy reliable transport protocol like TCP. Hence, in each user opportunistic application would run an OACL client instance which is connected to the OACL server side.

### 4. Wireless Infrastructure Database (WID) block 307

Each vehicle keeps a database of the access points encountered or those it heard about from other vehicles. In other words, this database, called the Wireless Infrastructure Database (WID) block 307, contains information being gathered by the Infrastructure Discovery and Association Layer (IDAL) block 304 or collected through the Cooperative Infrastructure Discovery Protocol (CIDP) block 308. Each AP entry of the WID database is composed with two parts: a part reserved to the AP properties and a second part reserved to information about the vehicle that detected the access point. Once a vehicle gets information about an AP, it has to add it to the Wireless Infrastructure Database (WID) block 307. In the case when this AP is already stored in the WID, the corresponding entry has to be updated accordingly. As a result of these operations, CIDP block 308 allows to keep an up-to-date WID in each vehicle.

Among the fields stored in the first part of an AP entry in the WID database, we can list the BSSID, the ESSID, and the AP-related security information. We also have the frequency channel number field (which depends on the AP supported 802.11 variant: a/b/g/p) indicating on which channel the AP is operating and whether the Dynamic Frequency Selection (DFS) option is enabled or not. Note that if DFS is not enabled, when data is to be transmitted, the vehicle will not have to scan again all the channels. There is another field reserved to the AP estimated position which can be approximated with triangulation methods using at least the positions and signal strength information of three of the vehicles that detected it. Initially, this field is left empty but later with more received information; the vehicle would be able to compute an approximated value of it. The list of services provided by the AP is also stored in its entry in the WID.

As far as the position field is concerned it consists of the latitude, the longitude, and the elevation (altitude) of the access point. Additionally, a field named timestamp stores the time when the AP entry has been discovered. This value corresponds to the time when the AP was originally scanned for the first time (not necessarily by the vehicle itself) and not when the entry was inserted in the database for the first. To the above mentioned fields, we decided to add an expiration time field indicating the time after which the entry will be considered obsolete if not updated and then removed from the WID database. This timer, which can be in number of days, is used to avoid keeping irrelevant entries for a long period. Other fields such as signal level, noise level and quality of the signal (computed with both signal and noise levels values) are also present to give information about the quality of the signal being received from the AP. Finally, a set of extra fields is added according to the AP security information. This set includes information about the IP, the default gateway, and the DNS address(es) obtained whenever a vehicle successfully connect to the AP using DHCP (Dynamic Host Configuration Protocol). Otherwise, it will be filled with information about the used security mechanism.

The second part of the AP entry in the WID database is reserved for storing information about the vehicle that originally detected the AP (not necessarily the one from which the corresponding properties have been received). The first field contains the identity of the vehicle that detected the AP. A field speed keeps the velocity of the vehicle when the AP was scanned for the first time. The vehicle's position is kept in the field position which contains the latitude, the longitude, and the vehicle elevation (as the vehicle can be on top of a bridge or inside a tunnel). Entries in the WID are filled upon reception of messages either directly from scanned APs or from neighboring vehicles through V2X communications.

Thanks to the CIDP block 308, the vehicles can announce the information they gathered about the infrastructure to other surrounding vehicles and can request missed information in the WID block 307.

### 5. Cooperative Infrastructure Discovery Protocol (CIDP) block 308

### 5.1. Announcing access points

One of the design goals of CIDP block 308 is to ensure the sharing of wireless infrastructure knowledge among vehicles. This is achieved through the exchange of specific messages opportunistically between vehicles which are in the communication range of each other. To increase the efficiency of CIDP, two types of infrastructure announcement messages have been introduced: unsolicited and solicited. These two categories are detailed in the following subsection.

### 5.1.1. CIDP unsolicited announcements

Unsolicited announcements designate periodic broadcast messages sent by vehicles to cooperatively help each other updating their WID databases with fresh and new information about available APs. We defined three different kinds of unsolicited announcements which can be used according to the needs of the user applications looking for a temporary (limited) Internet connectivity namely position, time and type-based broadcasts. In the first type, the vehicle will broadcast the information about only the APs located in a specific zone (referred as position-based announcements). The second type serves to limit broadcasted data to that inserted/updated after a specific time (referred as time-based broadcast). This type can be used to increase the freshness degree of the WID data since only new infrastructure information will be circulating in the network. The third category of unsolicited announcements consists in restricting the broadcasted information to only APs that offer free access without security protection (referred as type-based broadcast). CIDP also provides the possibility to combine two of all these types when sending unsolicited announcements.

Obviously, the efficiency of CIDP thanks to unsolicited announcements broadcasting is highly correlated with different factors such as the movement pattern and density of the vehicles. For instance, high vehicles speed may compromise the exchange of the data as in this case the inter-vehicle connectivity time may be not enough to allow vehicles to exchange high volume of data. Besides this factor, vehicles density is also an important factor that influences the efficiency of CIDP since the likelihood of wetting and spreading more updates among neighbors will increase for high number of vehicles in a specific geographic area which in return would help CIDP to converge quickly and properly. Another important factor to consider is the broadcast interval which defines the duration between two successive broadcasts of unsolicited announcements. It is evident that this parameter would impact the frequency and quality of updates of WID's block 307 entries. We believe that the value of this interval can be dynamically tuned according to rush hours and vehicle expected scheduled journey that can be based on vehicles traffic history. Furthermore, it can also configured by taking into account the mobility and density of encountered vehicles.

### 5.1.2. CIDP solicited announcements

Sometimes, a vehicle can need precise information about the wireless infrastructure in a specific zone. For example, a tourist's vehicle can require the full list of APs located in a first-time visited city. In this case, unsolicited announcements, as described in the previous subsection, can be not sufficient for rapidly handle this request. For this reason, CIDP allows a vehicle to send an explicit infrastructure broadcast request to its neighbors. In return only vehicles which have the data matching this request will send back a reply. Although, this reply can be sent in a unicast manner to the originator vehicle, the replies may also be broadcasted in order to be overheard by vehicles in the neighborhood which allows them to graciously update their own WIDs. The replies to CIDP request messages are then called solicited announcements. It is clear that one CIDP infrastructure information request may result in more than one solicited announcement as the replies generated from different vehicles may not contain the same content. Vehicles overhearing at least one solicited announcements containing similar information they are willing to send have to cancel their sending process. A distance-based congestion control mechanism where a backoff-time inversely proportionally to the distance from the originator vehicle is used can potentially increase the efficiency of CIDP and avoid collisions between multiple solicited announcements. For multiple solicited announcements (that would not have the same content), the originator vehicle has to merge the gathered wireless infrastructure information.

Similarly to unsolicited announcements, solicited announcements can also be position-based, time-based, or type-based according to the information the user applications require to have at the time of generating the request.

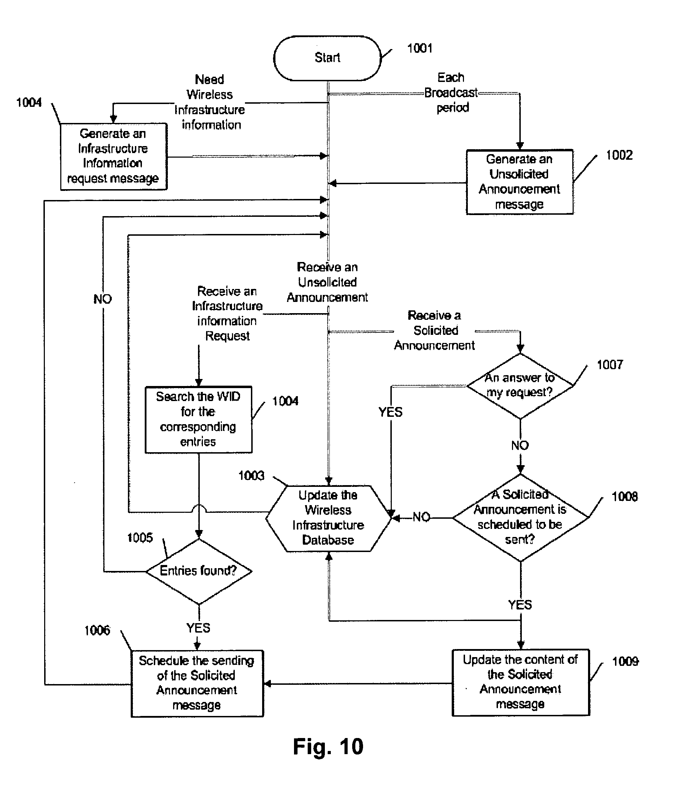

Figure 10 shows how each of CIDP messages is processed. Upon receiving either solicited or unsolicited announcements, a vehicle has to check the possible updates in its WID. This operation can be achieved either by adding entries of new announced APs or by updating the content of one of more fields (among those described above) of an existing AP. Besides, in the case when a vehicle is preparing a solicited announcement while it receives an unsolicited announcement, it has to consider fresher announced information if it is a solicited announcement message. Furthermore, when a request message is received, a vehicle will check if it has some request-matching entries and prepare a solicited announcement to be broadcasted.

### 5.2. Structure of CIDP messages

In this subsection, we will describe the format of CIDP messages exchanged between vehicles. Hence each field in of CIDP messages is explained and justified. However, fields which are common to more than one type of messages are discussed just once. Each message in CIDP is divided in two parts: a generic part, which is always present for all messages, followed by an optional part which content depends on the message type. Thus the second part will be detailed separately for each message type.

### 5.2.1. CIDP Packet: Generic Part

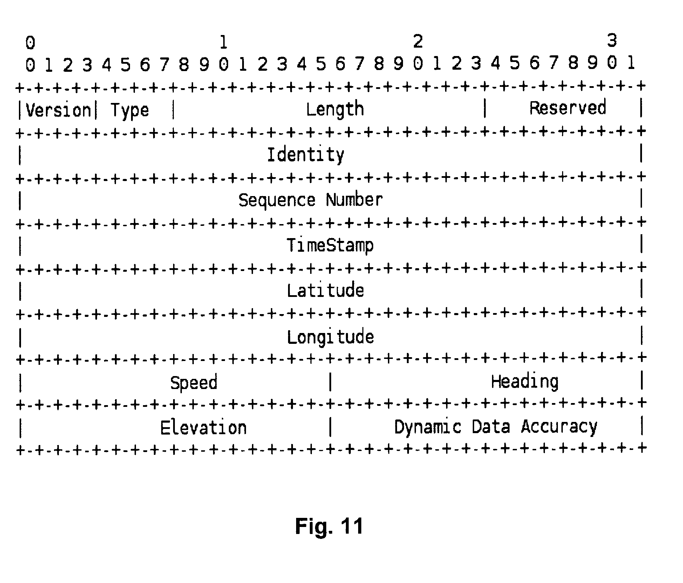

The format of the generic part is depicted in Figure 11 as an ASCII representation in network byte order. The content of some of these fields has been specified in order to guarantee the easy integration of CIDP (and so the whole herein described architecture) in ITS communications architectures under development by worldwide standardization bodies including IEEE, ETSI, and OSI. This part is common for all types of CIDP messages. It includes the following fields:
- Version (Protocol Version) 4-bit selector: identifies the version of the CIDP protocol.
- Type 4-bit selector: indicates the type of the exchanged message. Three types are used: unsolicited announcements (0x0), infrastructure information requests (0x01) and solicited announcements (replies) (0x02).
- Length 16-bit unsigned integer: length of the message in bytes of data related to the APs being sent in this message.
- Reserved 8-bit. The content of the field Reserved changes according the type of the message to be sent thus we will detail it separately in each of the different messages types.
- Identity 32-bit identifier: identity of the vehicle.
- Sequence number 32-bit unsigned integer: indicates to receiving vehicles whether broadcasted data has been updated to process or not to ignore it.
- Timestamp 32-bit unsigned integer: expresses the time in milliseconds at which latitude and longitude of the vehicle have been acquired.
- Latitude 32-bit signed integer: latitude of the vehicle expressed in signed units of 1 meter.
- Longitude 32-bit signed integer: longitude of the vehicle expressed in signed units of 1 meter.
- Speed 16-bit signed integer: speed of the vehicle expressed in signed units of 0.01 meters per second.
- Heading 16-bit unsigned integer: heading of the vehicle expressed in signed units of 0.005493247 degrees from North.
- Elevation 16-bit signed integer: elevation of the vehicle expressed in signed units of 1 meter.
- Dynamic Position Accuracy Indicators of the accuracy of the position, speed and heading information. This field may be used in the future to increase the accuracy of the position information using distributed position computing mechanisms.

As an example, infrastructure request messages contain only the CIDP generic part. More details about the content of each message will be given later in this invention's description.

### 5.2.2. CIDP Packet: Optional Part

In this section, we detail the content of the CIDP optional part eventually added to the generic part according to the type of message.

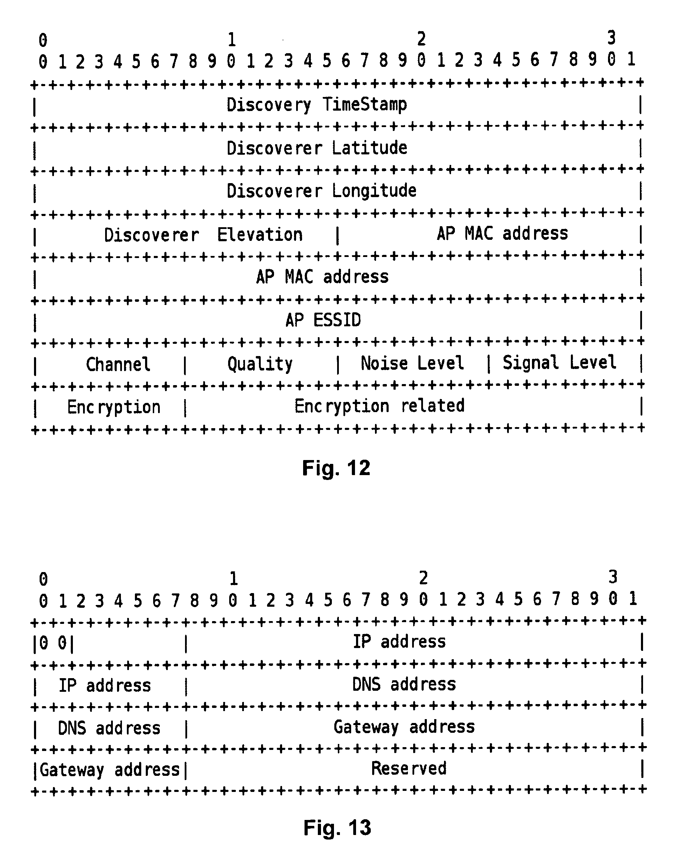

One of the important data which is present in both unsolicited and solicited announcements is AP information. An AP data frame contains the data related to one of the APs to be announced. Hence, there are as many frames as there are APs being announced. In Figure 12 we provide the content of an AP Information Element (AP IE). The fields in the AP IE are as follows:
- Discovery Timestamp 32-bit unsigned integer: expresses the time in milliseconds at which the AP was scanned by the vehicle.
- Discoverer Latitude 32-bit signed integer: latitude of the vehicle that actually scanned the AP expressed in signed units of 1 meter.
- Discoverer Longitude 32-bit signed integer: longitude of the vehicle that actually scanned the AP expressed in signed units of 1 meter.
- Discoverer Elevation 16-bit signed integer: elevation of the vehicle that actually scanned the AP expressed in signed units of 1 meter.
- *AP MAC Address* 48-bit address. The MAC Address of the access point.
- *AP ESSID* 32-bit characters: the name of the access point.
- *Channel* 8-bit signed integer: the number of the frequency channel on which the access point is operating.
- *Quality* 8-bit signed integer: quality of the received signal, computed using both the noise and the signal levels.
- *Noise Level* 8-bit signed integer: power of the noise received with the signal expressed in dB.
- *Signal Level* 8-bit unsigned integer: power of the received signal expressed in dB.
- *Encryption* 8-bit signed integer: the 2 first bits (n°0 and n°1) describe whether the AP has a secured access or not. When set to 00, they indicate that no security mechanism is used by the AP. In this case, the last 4 bits of the same field will be used as flags indicating whether the vehicle got an IP address (bit n°7), a default gateway address (bit n°6) and one or more DNS server addresses (bits n°5 and 4). Consequently, the required fields for non-secured AP as given in Figure 13 should be added to the AP Information Element shown in Figure 12.
- *IP address* 32-bit address: the assigned address to the vehicle by DHCP. This field is added if the bit n°7 is set to 1.
- *DNS address(es)* 32-bit address: the address(es) of DNS server(s) to use when connected to this AP. According to the value set in the bits n°5 and n°4 of the encryption field, there will be an address of 0 to 3 DNS servers indicated.
- *Gateway address* 32-bit address: the address of default gateway to use when connected to this AP. This field is added if the bit n°6 is set to 1.

If bits(0,1) = 0x01, 0x10, or 0x11 this indicates whether WEP, WPA or WPA2 are used as the encryption mechanism, respectively.

### 5.3. CIDP messages

As mentioned earlier, CIDP operations are based on three different types of messages:
- Unsolicited announcements: periodic broadcast messages of AP information elements sent by all vehicles.
- Infrastructure information requests: broadcast messages sent by a vehicle in order to request for wireless infrastructure information.
- Solicited announcements: broadcast replies sent by some vehicles upon receiving infrastructure information requests.

### 5.3.1. CIDP periodic broadcast messages

This message is used to spread the information collected about APs. This message has in its optional part the set of AP Information Elements to broadcast to all surrounding vehicles.

For CIDP periodic broadcast messages, the one byte field Reserved of the generic part of Figure 11 is divided into two parts: 2 bits to indicate the broadcast type (bt) and the 6 bits set information related to the type selected in the first part (bt related). The possible values of the reserved field are as follows:
- If the whole AP database is being broadcasted, bt is set to 00. This kind of AP information broadcast occurs only if the database size is beyond a specific threshold which value is indicated in the bt related field and is expressed in units of bytes.
- When the broadcasting is position-based, bt value is 01. In such type of AP information broadcast, we need to mention the boundaries of concerned geographic region. Although several shapes can be used, CIDP adopts the circle shape one which could be much more useful and can be specified in the message with less overhead. The center of the circle can be easily identified by the position of the vehicle sending the broadcast. The circle radius is set in the bt related field and is expressed in units of 100 meters.
- Finally, bt is set to 0x10 if a time-based broadcast is chosen. This type of broadcast limits the broadcasted information to only newly detected APs i.e. detected after a certain time which value is specified in the bt related field and is expressed in units of minutes.

### 5.3.2. CIDP infrastructure information request

When a vehicle requires specific information which it couldn't obtain neither in its WID nor through broadcasted unsolicited announcements, it can decide to send an infrastructure information request message where it specifies the requested data. As different types of requests can be sent, the value of the Reserved field of the generic part of Figure 11 depends on the request type. More precisely, there are three possible request types (or different combinations of these four types). Hence, we used three bits of the Reserved field as flags to indicate which request types are used. Bit n°0 indicates whether the request is position-based or not. Bit n°1 is set in the case the request is time-based. When the vehicle wants to request only the set of non-secured APs, bit n°2 will be positioned to 1.

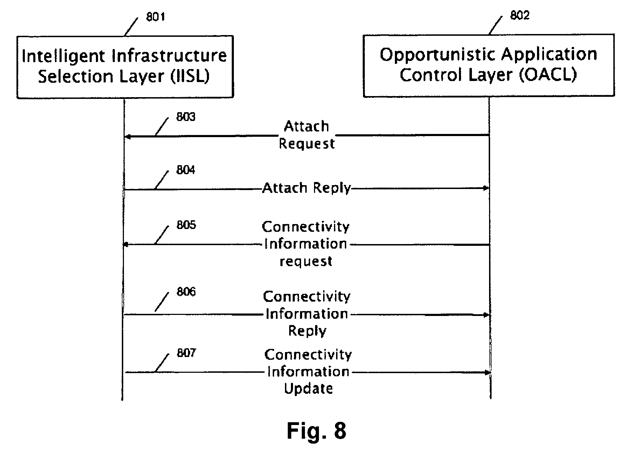

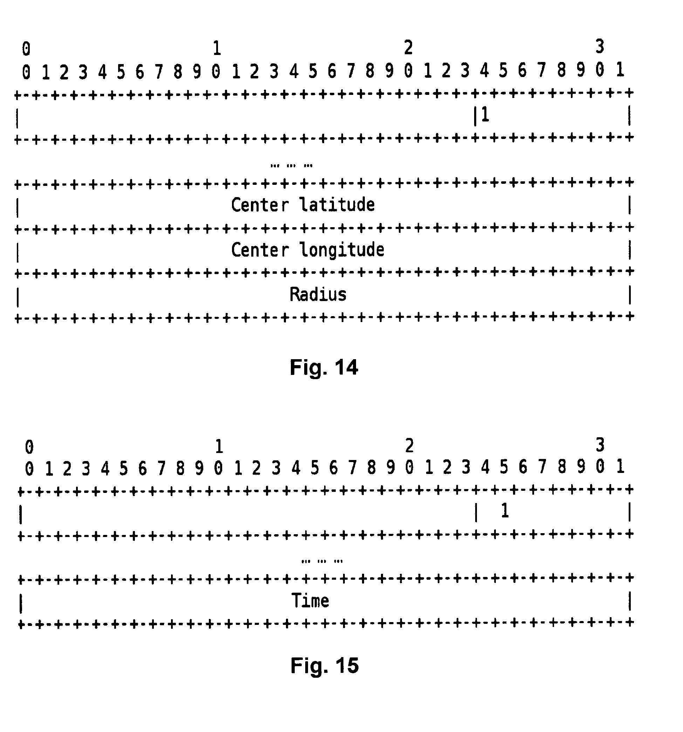

Once the type flags are set, several optional fields will be added according to them. As depicted in Figure 8 If the flag time is set, an extra field indicating the time expressed in minutes is added (32-bit signed integer). When the vehicle requests data about a specific zone, the added fields are the coordinates of the center node (a two 32-bit signed integer for latitude and longitude) and the circle radius (32-bit signed integer) as shown in Figure 14. Finally, no additional fields are required if request by AP type (secure or not secure) is to send.

### 5.3.3. CIDP broadcast replies

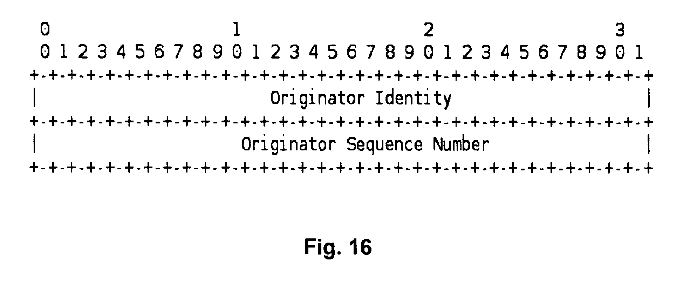

A CIDP reply message is sent as a response to a received information request from a neighboring vehicle. This message is only issued if the vehicle has information about the requested APs or about some of them. For this particular type of messages, the field Reserved of the generic part of Figure 11 remains unused. In addition to the APs Information Elements, two extra fields which are the Originator Identity and Originator Sequence Number are added as shown in Figure 16:
- Originator Identity 32-bit address: identities of the vehicle to which the reply is sent.
- Originator sequence number 32-bit unsigned integer: the received sequence number in the request being answered.

In fact, the vehicle can send its reply directly to the vehicle that requested the data (the originator). However, since we use wireless connection, all neighboring vehicles will overhear the reply sent. They can thus benefit from the APs IEs in it to update their own WID. That's why, instead of sending an unicast message to only the originator vehicle, we opted for a broadcast reply message where the two fields Originator Identity and Originator sequence number will identify the CIDP infrastructure information request being answered. As mentioned before, this can also help to optimize data sending; since other vehicles can cancel their queued replies or modify them if they find that the information (or part of it) they are going to send is already included in the received replies coming from other vehicles.

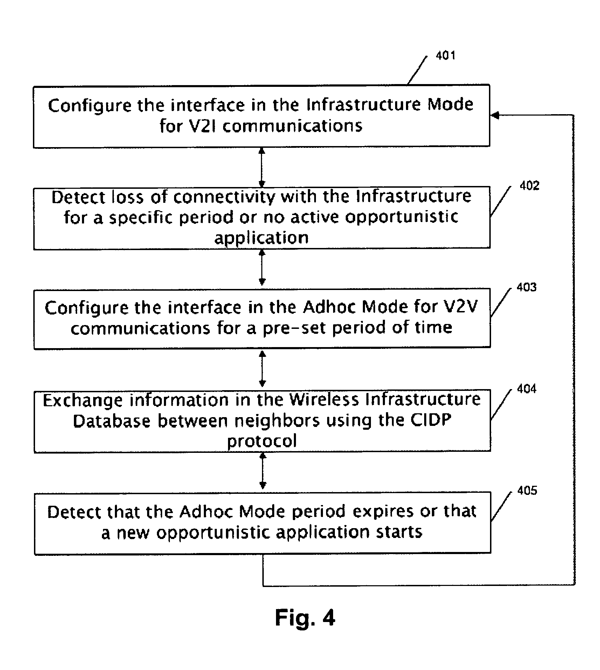

With respect to **Figure 4** there is illustrated the process of switching from infrastructure mode for V2I (vehicle to infrastructure) communications to adhoc mode for V2V (vehicle to vehicle) communications when the control unit 204 only incorporates one wireless interface.

In a step 401, which corresponds the default operation status of the wireless interface, the process tries to detect an existing Access Point and establishes an infrastructure Vehicle-to-Infrastructure communication. Such configuration allows wireless communication control unit to be associated and to communicate with one selected access point and serve as a gateway for any internal components/devices or opportunistic application inside the moving vehicle. During this phase the IDAL block 304 may search for available access points in the vehicle neighborhood in response of IISL block 305 requests.

In a step 402, the process detects a loss of connectivity with the selected access point and an absence of other available APs during a period of time due to the movement of the car. This step is also achieved if there is no active opportunistic application.

In response to such detection, the process then proceeds with a step 403 which consists in the configuration of the interface in the Adhoc Mode for V2V communications for a pre-set period of time.

In a step 404, the vehicle will exchange with other vehicles in the close vicinity, the whole or part of their Wireless Infrastructure Databases 307 using the CIDP block 308 protocol

Then, in a step 405, the process detects that the Adhoc Mode period expires or that a new opportunistic application starts. In this case, the process has to go to step 401 and then all steps are repeated indefinitely.

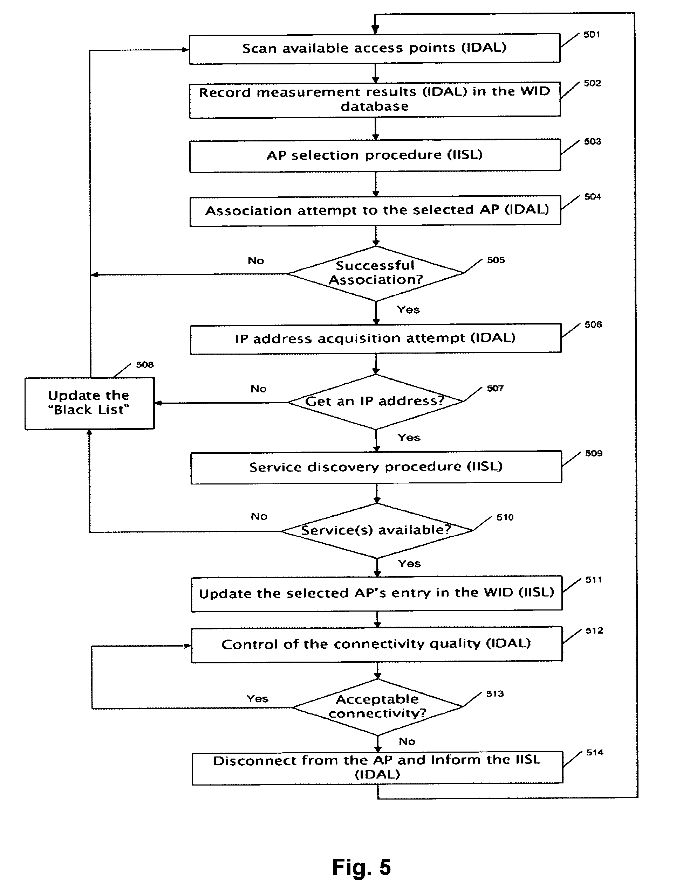

There is now described, with respect to Figure 5, the different functions steps which are executed in one embodiment of the invention for automatic detection and connection to WLAN hotspots encountered opportunistically in the roadside.

In a step 501, IDAL block 304 starts with a scan step in order to detect all possible access points (AP) being available in the neighborhood of the moving vehicle.

Then, in a step 502, IDAL block 304 starts gathering measurements results and information from the detected APs. Hence, IDAL block 304 connects to the wireless driver to gather information related to the access points in the neighborhood of the vehicle. To achieve this, IDAL block 304 can trigger active scan where the wireless card driver alternates between channels. Additionally, the coordinates and movement information (speed and direction) are collected via the GPS receiver 207. The position information includes latitude, longitude, altitude, heading, date, and vehicle velocity. IISL block 305 performs recording data in the Wireless Infrastructure Database block 307.

In a step 503, the process proceeds with an AP selection procedure which is handled by IISL block 305. While moving, the vehicle can encounter many APs, among them, which one case access points be the most promising as far as the internet connectivity is concerned. In one particular embodiment, the selection is achieved by the IISL block 305 using both information present in the wireless infrastructure database, and that provided by the GPS unit 207. In particular, the direction of the car is advantageously used by IISL block 305 in order to determine, not only the AP providing higher signal, but also the AP located to one position towards which the car is moving. Consequently, the IISL block 305 determines the AP which would provide the highest connectivity period to Internet.

Then, in a step 504, the process proceeds with an association attempt. To achieve this, IDAL block 304 tries to configure the wireless interface with the parameters: BSSID (which uniquely identifies the access point), the ESSID and the channel number (to accelerate the association procedure) of the best access point. This call consists in sending an association request to the best AP.

The process then proceeds to a step 505 which is a test to determine whether an association is successful with the selected Access Point, in which case, the process proceeds to a step 506 and, conversely, the process loops back to step 501.

In step 506, the process proceeds with an attempt to obtain an IP address. To achieve this, after performing MAC layer association, IDAL block 304 tries to acquire an IP address. Although the proposed architecture works for both IPV4 and IPV6, in the following we provide details on how IDAL operates to obtain an IP address when the AP and/or the vehicle communication unit are/is supporting IPV4. In this scenario, IDAL block 304 invokes the dhclient command in order to obtain an IP address. Since dhclient call is a bit expensive in time due to the required exchanged messages, this IDAL's process examines DHCP configuration file to set some timeouts in order to speed-up this phase. After some drives, one may adjust those values to be adopted with the AP's known information and the vehicle's speed. For example, if the dhclient fails to acquire an address, this phase times out after few seconds and the IP address acquiring process has to start another retry. Besides, one may exploit DHCP lease files to accelerate this step. In fact, once obtaining an IP address from an AP, IDAL block 304 maps the IP address of the DHCP server with its MAC address in a local cache. Before IDAL block 304 invokes dhclient, it uses the mac address of that AP to query its cache for AP's IP address. If an entry exists, it builds a new lease file of leases offered by that AP (other leases are preciously kept in another file to be added to the lease file when dhclient exits in order to use them in further iterations). Otherwise, the file is erased so that dhclient will not try to get a lease from an AP other than that to which the wireless interface is associated. It should be noticed that the behavior of dhclient as far as the update of the lease file is concerned (to say, eliminating the expired leases) is not modified. IDAL block 304 checks that dhclient call configures automatically the DNS server and the routing table in order to detect if the IP address acquiring phase was completely successfully or not.

In a step 507, the process tests whether an IP address has been successfully assigned and, in that case, the process proceeds to a step 509 and the control unit 204 is being assigned a proper IP address and becomes connected to the selected AP.

Otherwise, if it is the second failed attempt to get an IP address from this AP, this latter is marked in a step 508, that is added to a "black" list and, in one embodiment, the IISL block 305 will avoid using again such AP in the future.

In step 510, the process proceeds with a step of service discovery. In this step, IISL block 305 detects the services offered by the AP to which the vehicle communication unit is associated/connected.

Then, in a step 510, the IISL block 305 checks whether the services required by the active user opportunistic application are accessible via the selected AP, in which case, the process proceeds to a step 511.

If no service is available, the process proceeds to step 508 and the selected AP is added to the "black" list. Otherwise, the list of services available through this AP is updated in its corresponding entry of the WID database block 307.

In step 511, IISL block 205 updates the information concerning the selected AP in WID block 307.

In step 512, the process proceeds with the control of the quality of the connectivity. Indeed, once the car is connected to an AP, IDAL block 304 checks periodically, in a step 513, the link signal quality.

As long as the quality remains appropriate, the process loops back to step 512.

As soon as this quality is under a pre-set quality threshold, the process proceeds to a step 514 of disconnection of the connection and IDAL block 304 alerts IISL block 305. This later triggers scan operations and the application returns to step 501.

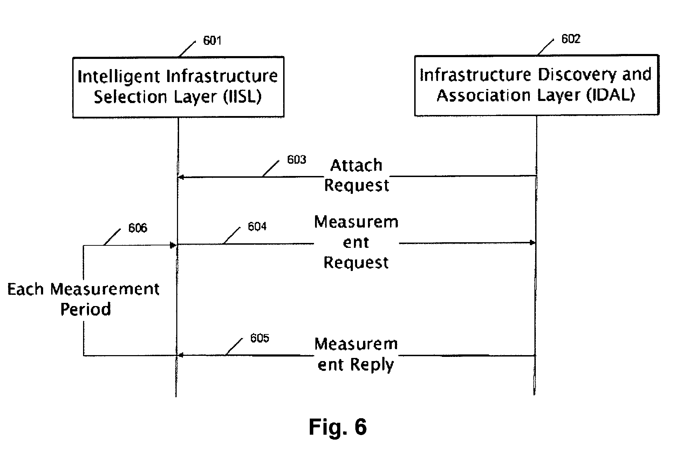

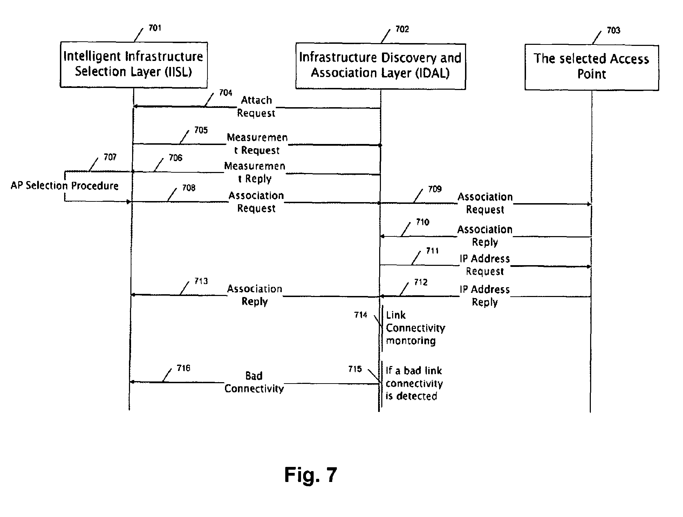

**Figure 6** and **7** particularly illustrate the exchange of message between IDAL block 304, IISL block 305 and one selected Access Point.

IDAL starts by sending an *AttachRequest* message 603 to IISL. This message is required in order for the IDAL to inform IISL about the wireless access technology it is monitoring (for example 802.11, 802.16, etc.). Once receiving the *AttachRequest* message, IISL launches the first scanning operation request by sending a *MeasurementRequest* message 604 toward IDAL. After performing scan operations, IDAL sends back a *MeasurementReply* message 605 which contains relevant information related to the discovered access points (APs). IISL will then update the Wireless Infrastructure Database (WID) block 307 with the received information. The messages *MeasurementRequest* and *MeasurementReply* are performed periodically with a period to time set in IISL.

Reference 606 in the figure indicates that the *MeasurementRequest* message 604 may be iteratively resent resulting every time in a *MeasurementReply* message sent by IDAL to IISL.

With respect to **Figure 7****,** one sees that when receiving a *MeasurementReply message 706 (following two consecutive AttachRequest* message 704 and *MeasurementRequest message 705),* IISL block 305 may perform an intelligent algorithm of access point selection and starts an association procedure by sending an *AssociationRequest* message 708 to IDAL. This message includes information about the selected AP including MAC address, the ESSID, the frequency channel. Using this set of information, IDAL starts a configuration procedure of the wireless interface by sending a corresponding *AssociationRequest* message 709 to the selected Access Point which responds by a corresponding *AssociationReply* message 710. If the association succeeds, the IDAL attempts an IP address acquisition, which handled using the DHCP (Dynamic Host Configuration Protocol) when using IPv4, by means of an appropriate *IPAddressRequest* message 711, to which the Selected Access Point responds by a corresponding *IPAddressReply* message 712 to IDAL block 304. After each association attempt, an *AssociationReply* message 713 containing the attempt result (successful or failed) is sent back to the IISL module block 305. When the association succeeds, IDAL has to continuously monitor the selects AP's signal quality in phase 714. If this signal becomes lower than pre-configured threshold as shown in 715, IDAL alerts IISL by sending an *AlertNotifcation* message 716 advising the bad connectivity.
**Figure 8** particularly shows the exchange of messages between ISSL block 305 and OACL block 306. OACL block 306 attaches to ISSL block 305 by sending an *AttachRequest* message 803. Upon receiving of an AttachedRequest message, ISSL sends an *AttachReply* message 804 to OACL. One OACL needs to know information about the connectivity to the Internet, it sends to ISSL ConnectivitylnformationRequest message 805. In return, IISL sends back to OACL a ConnectivitylnformationReply message 806 which contains information about the characteristics of the current connectivity to the Internet. When there is no available connectivity to the Internet, this message shall inform the OACL by setting the ConnectityFlag in ConnectivitylnformationReply message to 0. In this case, in order to avoid periodic exchange of request and reply message about connectivity Information, the ISSL module shall send back to OACL ConnectivitylnformationReply message as soon as connectivity to the Internet is detected. When the IISL module detects that there is a change on the characteristics of the current connection to the Internet (connectivity time, throughput, etc.), it has to inform immediately the OACL module by sending a ConnectivitylnformationUpdate message 807
**Figure 9** shows the interaction between each opportunistic application and the OACL module. An opportunistic application willing to exchange information with an external server using the wireless connection to the Internet opportunistically established by the vehicular communication device, has first to register to the OACL module using a RegisterRequest message 904. A RegisterReply message 905 is sent back by the OACL.

Once a registered opportunistic application wants to start sending data to the Internet, it has to send a ResourceRequest message 906 to OACL which answer with a ResourceReply message 909. The ResourceRequest message has to include details about the requested resource such as the number of bytes to send, the minimum requested bytes to send. The ResourceReply message contains an indication about the processing result of the request sent by the opportunistic application. In particular, it would indicate the amount of available resources in bytes.

At the interface between OACL block 306 and IISL block 305, the messages being exchanged include a ConnectivitylnformationRequest message 907 which asks IISL about the characteristics of the current connectivity. In return, a ConnectivitylnformationReply message 908 is sent to OACL which sends a ResourceReply message 909 to the opportunistic application. The OACL block can send a StopSend message 910 at anytime to the opportunistic application to request it to stop sending packets to the communication unit 204. This may happen for example when the OACL integrates a scheduling mechanism which tries to share the available resources fairly between active opportunistic applications. Consequently, the opportunistic application should send back a SendReport message 911 to the OACL in order to inform about the number bytes which have successfully transmitted and eventually the remaining number of bytes waiting to be sent. Note that this message can be also triggered without receiving a StopSend message from the IISL.

**Figure 10** shows the operations of the CIDP block 308. After each specific period of time, CIDP sends an unsolicited announcement message 1002. Additionally, when some information about the wireless infrastructure is needed, CIDP generates an infrastructure information request messages 1004 which is broadcasted to all neighbors. When a vehicle receives a CIDP unsolicited announcement message, it has to update its wireless infrastructure database 1008, accordingly. Upon receiving an infrastructure information request from one of its neighbors, CIDP has to search in the Wireless Infrastructure Database 1005 for the corresponding entries as requested by the vehicle initiating the infrastructure information request. If useful entries are found in the WID database, CIDP has to prepare and schedule the sending of a solicited announcement message 1006. When a vehicle receives a solicited announcement message it has to update its WID 1003 if this message is an answer of a previously generated infrastructure information request analyzing the content 1007 based on the fields of Figure 16 or if a solicited announcement message as a response to the same the source is not scheduled to be sent 1008. Furthermore, if the vehicle has already scheduled a solicited announcement message to be sent responding the same request as the received one, it has then to update the content of its message 1009 and reschedule it for sending 1006.
**Figure 11** illustrates more particularly the structure and format of the generic part of messages exchanged though the CIDP which can be exchanged between two vehicles, including information related to the position of the vehicle sending the message as its identity. It also contains the type field which content depend on the CIDP message being sent.
**Figure 12** illustrates more particularly the structure and format of one AP Information Element which provides information related to an AP stored in the Wireless Infrastructure Database (WID) and this for both secured and non-secured APs.
**Figure 13** illustrates more particularly connectivity information should be added to the AP Information Element in case when these information are present in the corresponding entry in the WID database. This concerns the vehicle offered IP address, DNS addresses, and the gateway address.
**Figure 14** illustrates more particularly the structure and format of fields that should be added in position-based CIDP messages.
**Figure 15** illustrates more particularly the structure and format of fields that should be added in time-based CIDP messages.
**Figure 16** illustrates more particularly the structure and format of specific fields that should be added in CIDP solicited announcement identifying the CIDP infrastructure information request being replied.

## Claims

1. Process for establishing fast intermittent connections between a moving system and external Access points, said moving system comprising a Wireless infrastructure Database (307) of available Access Points, said process involving the steps of:
- establishing a first infrastructure connection between said moving system and one access point, allowing one application running into said moving system to get intermittent access to the Internet network;
- establishing a second adhoc connection between said moving system and a counterpart second moving system;
- exchanging information/data with said second moving system relative to infrastructure parameters to be used for the next infrastructure connection which may be used by said application.

2. Process according to claim 1, **characterized in that** said first infrastructure connection uses a first radio interface and said second adhoc connection uses a second radio interface.

3. Process according to claim 2 **characterized in that** said first infrastructure and said second infrastructure connection use the same radio interface which can be switched from infrastructure mode to an adhoc mode.

4. Process according to claim 3 wherein said moving system stores and updates a Wireless Infrastructure Database (307) of available Access Points, said process further comprising the steps of:
- configure (401) said system to an infrastructure mode so as to allow connection to one available Access Point so as to provide Internet Connection to said application;
- detecting (402) loss of connectivity with said Access Point or no request for connection from said application;
- configure (403) the interface to an adhoc communication mode so as to be able to enter into a cooperative mode with a second moving system in order to exchange information contained into said database (307);
- exchanging information (404) with said cooperative second moving system and relative to the wireless infrastructure parameters for a future connection; ;
- switches (405) back to said infrastructure mode using the information received from said second moving system;

5. Process according to claim 4 **characterized in that** it further involves the step of collecting Global Positioning Satellite (GPS) position and speed of the moving system and use said information for determining and selecting the more appropriate access point to use in an infrastructure connection.

6. Process according to claim 4 to 5 **characterized in that** it involves a first functional block (304) for periodically scanning the presence of access points and for gathering information relevant to said scanned access point including,
- Time stamp: date of the discovery of the AP;
- Global Positioning Satellite (GPS) coordinates including: altitude, longitude, latitude of the vehicle when discovering the AP in question;
- Speed of the vehicle;
- identifiers of the Access point (BSSID, ESSID);
- Frequency channel number;
- Encryption: set to "on" or "off' depending on whether the AP applies or not authentication mechanisms;
- Signal quality and noise level.

7. Process according to claim 6 **characterized in that** it involves a second functional block (305) communicating with said first functional block and acceding to said Wireless Infrastructure Database (307) for the purpose of selecting the more appropriate Access Point to use in an infrastructure connection.

8. Process according to claim 7 **characterized in that** it involves a third functional block (306) communicating with said second functional block (IISL) and providing interface with opportunistic applications running inside said moving system and requesting access to the Internet Network, said third functional block exchanging ConnectivitylnformationRequest and ConnectivitylnformationReply with said second functional block and exchanging messages of:
RegisterRequest, RegisterReply, ResourceRequest and ResourceReply with said opportunistic application.

9. Process according to claim 8 **characterized in that** it involves a fourth functional block (CIDP 308) providing communication in adhoc mode with cooperative moving systems in order to exchange relevant information contained in the Wireless Infrastructure Database (307).

10. Communication system for establishing fast intermittent connections between a moving system and external Access points, said moving system comprising a Wireless infrastructure Database (307) of available Access Points, said system including:
- means for establishing a first infrastructure connection between said moving system and one access point, allowing one application running into said moving system to get intermittent access to the Internet network;
- means means for establishing a second adhoc connection between said moving system and a counterpart second moving system;
- means for exchanging information/data with said second moving system relative to infrastructure parameters to be used for the next infrastructure connection which may be used by said application.

11. Communication system according to claim 10, **characterized in that** said first infrastructure connection uses a first radio interface and said second adhoc connection uses a second radio interface.

12. Process according to claim 10 **characterized in that** said first infrastructure and said second infrastructure connection use the same radio interface which can be switched from infrastructure mode to an adhoc mode.

13. Communication system according to claim 12 wherein said moving system stores and updates a Wireless Infrastructure Database (307) of available Access Points, said system further comprising:
- means for configuring said system to an infrastructure mode so as to allow connection to one available Access Point so as to provide Internet Connection to said application;
- means for detecting a loss of connectivity with said Access Point or no request for connection from said application;
- means for configuring the interface to an adhoc communication mode so as to be able to enter into a cooperative mode with a second moving system in order to exchange information contained into said database;
- means for exchanging information with said cooperative second moving system and relative to the wireless infrastructure parameters for a future connection; ;
- means for switching back to said infrastructure mode using the information received from said second moving system;

14. Communication system according to anyone of claims 10 to 13 **characterized in that** it is adapted to a moving vehicle, such as a car, and **in that** it further includes means for collecting GSP position of the car and record said position in said Wireless Infrastructure Database (307) in association with the detected Access Points.

15. Communication system according to claims 10 to 14 **characterized in that** it includes:
- a first functional block (304) for periodically scanning the presence of access points and for gathering information relevant to said scanned access point including,
- Time stamp: date of the discovery of the AP;
- Global Positioning Satellite (GPS) coordinates including: altitude, longitude, latitude of the vehicle when discovering the AP in question;
- Speed of the vehicle;
- Identifiers of the Access point (BSSID, ESSID)
- Number of the frequency channel in which the AP is operating.
- Encryption: set to "on" or "off' depending on whether the AP applies or not authentication mechanisms;
- Signal quality and noise level.
- a second functional block (305) communicating with said first functional block and acceding to said Wireless Infrastructure Database (307) for the purpose of selecting the more appropriate Access Point to use in an infrastructure connection.
- a third functional block (306) communicating with said second functional block (IISL 305) and providing interface with opportunistic applications running inside said moving system and requesting access to the Internet Network, said third functional block exchanging ConnectivitylnformationRequest and ConnectivitylnformationReply with said second functional block and exchanging messages of :
RegisterRequest, RegisterReply, ResourceRequest and ResourceReply with said opportunistic application.
- a fourth functional block (CIDP 308) providing communication in adhoc mode with cooperative moving systems in order to exchange relevant information contained in the Wireless Infrastructure Database (307).
